# EUROPÄISCHE PATENTANMELDUNG

(11) **EP 1 113 554 A1**
(43) Veröffentlichungstag der Anmeldung: **04.07.2001**
(21) Anmeldenummer: 00127645.0
(22) Anmeldetag: 16.12.2000
(51) Int. Cl.: H02G 3/08

(54) **Kabeldurchführung**

(30) Priorität: 31.12.1999 DE 19963907; 17.03.2000 DE 10013220
(71) Anmelder: Lapp Holding Aktiengesellschaft, 70565 Stuttgart (DE)
(72) Erfinder: Lapp, Siegbert, 70599 Stuttgart (DE); Schaeffer, Jürgen, Dr., 70771 Leinfelden-Echterdingen (DE)
(74) Vertreter: Beck, Jürgen, Dr. Dipl.-Phys.

(57) **Zusammenfassung**

Um eine Kabeldurchführung umfassend einen Montagekörper, welcher mit einer Montagekörperhülse in eine Öffnung eines Gehäuses einsetzbar und an dieser fixierbar ist und eine am Montagekörper gehaltene Aufnahme für ein durchzuführendes Kabel, welche einen Durchführungskanal und ein elastisch deformierbares und das durchgeführte Kabel haltendes Fixierelement umfaßt, derart zu verbessern, daß diese möglichst einfach herstellbar ist und dennoch die Möglichkeit einer Kabelfixierung schafft, wird vorgeschlagen, daß der Montagekörper und die Aufnahme mit dem Fixierelement einstückig aus elastischem Kunststoff hergestellt sind und daß das Fixierelement durch von einer Innenseite der Montagekörperhülse abstehende elastisch deformierbare Vorsprünge gebildet ist, welche in azimutaler Richtung um eine Mittelachse des Durchführungskanals verlaufende Reihen von an dem Kabel anlegbaren Angriffsflächen bilden, und daß in Richtung der Mittelachse mindestens zwei derartiger Reihen versetzt zueinander angeordnet sind.

## Beschreibung

Die Erfindung betrifft eine Kabeldurchführung umfassend einen Montagekörper, welcher mit einer Montagekörperhülse in eine Öffnung eines Gehäuses einsetzbar und an dieser fixierbar ist, und eine am Montagekörper gehaltene Aufnahme für ein durchzuführendes Kabel, welche einen Durchführungskanal und ein elastisches deformierbares und das durchgeführte Kabel haltendes Fixierelement umfaßt.

Derartige Kabeldurchführungen sind aus dem Stand der Technik bekannt. Bei diesen Kabeldurchführungen dient eine Gewindehülse als Montagekörper, wobei die Gewindehülse auf einer Seite in eine Gehäuseöffnung einschraubbar ist und auf ihrer anderen Seite eine aufgeschraubte Hutmutter trägt. Diese Hutmutter dient dazu, einen ebenfalls an der Gewindehülse vorgesehenen Lamellenkorb zu beaufschlagen, in welchen eine Ringdichtung eingelegt ist. Durch die Beaufschlagung der Hutmutter läßt sich über den Lamellenkorb die eingelegte Ringdichtung deformieren und in Richtung des Kabels komprimieren, so daß dadurch einerseits ein dichter Abschluß um das durchgeführte Kabel herum entsteht und andererseits das Kabel durch die radiale Pressung fixiert ist.

Derartige Kabeldurchführungen sind aufwendig herzustellen.

Der Erfindung liegt daher die Aufgabe zugrunde eine Kabeldurchführung der gattungsgemäßen Art derart zu verbessern, daß diese möglichst einfach herstellbar ist und dennoch die Möglichkeit einer Kabelfixierung schafft.

Diese Aufgabe wird bei einer Kabeldurchführung der eingangs beschriebenen Art erfindungsgemäß dadurch gelöst, daß der Montagekörper und die Aufnahme mit dem Fixierelement einstückig aus elastischem Kunststoff hergestellt sind, daß das Fixierelement durch von einer Innenseite der Montagekörperhülse abstehende elastisch deformierbare Vorsprünge gebildet ist, welche in azimutaler Richtung um eine Mittelachse des Durchführungskanals verlaufende Reihen von an dem Kabel anlegbaren Angriffsflächen bilden, und daß in Richtung der Mittelachse mindestens zwei derartiger Reihen versetzt zueinander angeordnet sind.

Der Vorteil der erfindungsgemäßen Lösung ist somit darin zu sehen, daß die erfindungsgemäße Kabeldurchführung aufgrund der einstückigen Ausführung einfach herstellbar ist und andererseits auch einfach montierbar ist, da lediglich das Kabel in den Durchführungskanal eingeführt werden muß und dabei die Vorsprünge deformiert, welche dann in ihrem deformierten Zustand das Kabel in der Kabeldurchführung fixieren.

Besonders günstig ist es dabei, wenn die Vorsprünge in axialer Richtung der Aufnahmehülse deformierbar sind, da diese dann aufgrund ihrer Deformation beim Einführen des Kabels in Einschubrichtung einem Herausziehen des Kabels aus der Kabeldurchführung entgegengesetzt zur Einschubrichtung ähnlich wie Widerhaken entgegenwirken.

Die Anordnung der Vorsprünge kann grundsätzlich in unterschiedlichster Art und Weise erfolgen. Beispielsweise wäre es denkbar, daß alle Vorsprünge sich gleich weit in den Durchführungskanal hineinerstrecken.

Besonders günstig ist es jedoch, wenn die in Längsrichtung des Durchführungskanals versetzt angeordneten Reihen von Vorsprüngen sich radial unterschiedlich weit in den Durchführungskanal hinein erstrecken.

Eine besonders vorteilhafte Lösung sieht dabei vor, daß die einem Ende des Durchführungskanals naheliegenden Reihen von Vorsprüngen sich radial zur Mittelachse weiter in den Durchführungskanal hineinerstrecken als einem gegenüberliegenden Ende naheliegende Reihen von Vorsprüngen.

Eine besonders zweckmäßige Lösung sieht vor, daß die in Richtung der Achse des Durchführungskanals aufeinanderfolgend angeordneten Reihen von Vorsprüngen sich mit zunehmendem Abstand von einem Ende des Durchführungskanals weniger weit in diesen hineinerstrecken.

Vorzugsweise sieht diese Lösung dabei vor, daß die dem äußeren Ende des Durchführungskanals naheliegende Reihe von Vorsprüngen sich am weitesten radial in diesen hineinerstreckt.

Hinsichtlich der Art der Vorsprünge wurden bislang keine näheren Angaben gemacht. So wäre es beispielsweise denkbar, die Vorsprünge in Form von Noppen oder borstenähnlich auszuführen.

Eine besonders günstige Lösung sieht vor, daß die Vorsprünge als Lamellen ausgebildet sind, die sich mit ihren Flachseiten quer zur Mittelachse des Durchführungskanals erstrecken.

Derartige Lamellen können dabei in unterschiedlichster Art und Weise angeordnet sein. Eine vorteilhafte Lösung sieht vor, daß die Lamellen kreisringförmig um die Mittelachse herum angeordnet sind.

Besonders günstig ist es dabei, wenn die Lamellen azimutal geschlossene Lamellenringe um die Mittelachse herum bilden.

Alternativ zum Vorsehen von azimutal geschlossenen Lamellenringen sieht ein vorteilhaftes Ausführungsbeispiel vor, daß die Lamellen als Einzellamellen durch Schlitze voneinander getrennt angeordnet sind.

Eine besonders vorteilhafte Lösung sieht dabei vor, daß die Lamellen in Form von Lamellenringen angeordnet sind, jedoch jeweils durch ihre Schlitze getrennt sind.

Besonders günstig ist es dabei, wenn die Schlitze in ungefähr radialer Richtung zur Mittelachse verlaufen, da dann vorzugsweise eine symmetrische Trennung der einzelnen Lamellen vorliegt und somit alle Lamellen ungefähr dieselben Eigenschaften haben.

Vorzugsweise ist dabei vorgesehen, daß die Lamellen beispielsweise als Kreisringsektoren um die Mittelachse herum angeordnet sind.

Die Ausrichtung der Lamellen relativ zur Mittelachse kann prinzipiell beliebig sein. So wäre es beispielsweise denkbar, die Lamellen jeweils in senkrecht zur Mittelachse verlaufenden Ebenen auszurichten.

Alternativ dazu sind die Lamellen gegenüber der Mittelachse geneigt angeordnet, d.h. die Lamellen erstrecken sich in Flächen, die mit der Mittelachse einen Winkel von weniger als 90° einschließen.

Vorzugsweise sind die Lamellen dabei in Richtung des inneren Endes des Durchführungskanals geneigt, d.h. die der Mittelachse zugewandt liegenden Bereiche der Lamellen liegen näher beim inneren Ende als die der Montagekörperhülse zugewandt liegenden Bereiche.

Eine besonders günstige Lösung sieht jedoch vor, daß die Lamellen sich in Kegelflächen mit der Mittelachse als Kegelachse erstrecken.

Eine derartige Ausrichtung der Lamellen hat den Vorteil, daß damit die Lamellen in besonders günstiger Art und Weise als Art Widerhaken auf ein durchgeführtes Kabel wirken.

Besonders günstig ist diese Wirkung, wenn die Kegelspitze von der Kegelfläche in Richtung des inneren Endes des Durchführungskanals weist.

Eine weitere Möglichkeit sieht vor, daß die Lamellen helixförmig um die Mittelachse herum angeordnet sind, wobei es besonders günstig ist, in diesem Fall die Lamellen in Form eines helixförmig verlaufenden durchgehenden Lamellenzuges auszubilden.

Es ist aber auch denkbar, bei helixförmig angeordneten Lamellen diese als durch Schlitze getrennte Einzellamellen auszubilden.

Ferner ist es denkbar, die Lamellen gegenüber der Mittelachse geneigt, d.h. mit einem Winkel von weniger als 90° zwischen den Lamellen und der Mittelachse, auszubilden.

Hinsichtlich der Ausbildung des Durchführungskanals sind die unterschiedlichsten Lösungen denkbar. So wäre es beispielsweise denkbar, den Durchführungskanal mit ungefähr gleichmäßigem Querschnitt von dem inneren Enden bis zum äußeren Ende auszuführen.

Eine besonders günstige Lösung sieht vor, daß der Durchführungskanal auf einer dem inneren Ende desselben zugewandten Seite einer der Lamellen einen größeren Querschnitt aufweist als auf einer dem äußeren Ende zugewandten Seite derselben.

Diese Lösung hat den Vorteil, daß damit das Biegeverhalten der Lamellen verbessert wird, insbesondere da sich die Lamellen vorteilhaft besser in Richtung des inneren Endes des Durchführungskanals biegen lassen.

Ein weiterer Vorteil ist der, daß damit auch die Spritzgußform für die Herstellung der Kabelführung leichter entformbar ist.

Eine besonders günstige Lösung sieht vor, daß der Durchführungskanal stufenweise in aufeinanderfolgenden Bereichen von dem äußeren Ende in Richtung des inneren Endes erweitert.

Vorzugsweise sind dabei am Übergang von einem Bereich zum nächsten Bereich des Durchführungskanals die Lamellen angeordnet.

Alternativ dazu ist es aber auch denkbar, den Durchführungskanal so auszubilden, daß er sich im wesentlichen kontinuierlich vom äußeren Ende in Richtung des inneren Endes erweitert, so daß damit ein ähnlicher Effekt wie vorstehend beschrieben erzielt werden kann.

Eine günstige Lösung wäre, eine Art konische oder eine Art paraboloide Erweiterung von dem äußeren Ende in Richtung des inneren Endes.

Im Falle von azimutal geschlossenen Lamellenringen könnte prinzipiell das Vorsehen einer zusätzlichen Abdichtung entfallen. Dennoch ist es selbst bei azimutal geschlossenen Lamellenringen von Vorteil, wenn der Durchführungskanal mit einer Dichtmembran verschlossen ist.

Eine derartige Dichtmembran ist vorzugsweise so aufgebaut, daß sie bei noch nicht eingesetztem Kabel den Durchführungskanal vollständig verschließt, jedoch Sollbruchstellen aufweist. Mit derartigen Sollbruchstellen besteht die Möglichkeit, mit einfachen Hilfsmitteln oder bereits durch Einführen des Kabels einen Durchbruch in der Dichtmembran zu erzeugen.

Eine besonders günstige Lösung sieht vor, daß die Dichtmembran ringförmig um die Achse des Durchführungskanals herum verlaufende Sollbruchlinien aufweist.

Derartige Sollbruchlinien sind vorzugsweise als linienförmige Schwachstellen des Materials der Dichtmembran ausgebildet.

Hinsichtlich der Anordnung der Dichtmembran wurden bislang keine näheren Angaben gemacht. So wäre es beispielsweise denkbar, die Dichtmembran an jeder Stelle des Durchführungskanals anzuordnen.

Eine besonders günstige Lösung für den Einsatz der erfindungsgemäßen Kabeldurchführung sieht jedoch vor, daß die Dichtmembran im Bereich einer Außenseite des Durchführungskanals angeordnet ist und vorzugsweise diesen auf seiner Außenseite abschließt.

Um eine Beschädigung der Dichtmembran zu vermeiden ist vorzugsweise vorgesehen, daß die Dichtmembran in einen Stirnbereich des Montagekörpers angeordnet ist und insbesondere mit einer Stirnseite des Montagekörpers fluchtend angeordnet ist.

Bezüglich der Anordnung der Dichtmembran wurden bislang keine näheren Angaben gemacht. So wäre es beispielsweise denkbar, die Dichtmembran als separates Element auf den Montagekörper aufzusetzen.

Um jedoch eine besonders einfach herzustellende Kabeldurchführung zu erhalten ist es vorteilhaft, wenn die Dichtmembran einstückig an dem Montagekörper angeformt ist.

Hinsichtlich der Ausbildung des Montagekörpers selbst wurden bislang keine näheren Angaben gemacht. Beispielsweise wäre es denkbar, den Montagekörper mit Rastelementen zu versehen und mit diesen in der Öffnung des Gehäuses zu fixieren.

Eine andere Möglichkeit wäre, bajonettartige Fixierelemente vorzusehen.

Eine besonders bevorzugte Lösung sieht vor, daß der Montagekörper mit einem Gewindeabschnitt zum Einschrauben in die Öffnung des Gehäuses versehen ist.

Um den Montagekörper mit dem Gewindeabschnitt sinnvoll in die Öffnung einschrauben zu können, ist vorzugsweise vorgesehen, daß der Montagekörper Drehangriffsflächen trägt, wobei die Drehangriffsflächen vorzugsweise zwischen einem Stirnbereich und dem Gewindeabschnitt angeordnet sind.

Diese Drehangriffsflächen können so ausgebildet sein, daß sie ein manuelles Drehen des Montagekörpers erlauben.

Besonders günstig ist es jedoch, wenn die Drehangriffsflächen Schlüsselflächen sind, so daß mit einem konventionellen Schlüssel die Kabeldurchführung in die Öffnung des Gehäuses eingeschraubt werden kann.

Hinsichtlich des Materials der erfindungsgemäßen Kabeldurchführung wurden bislang keine näheren Angaben gemacht. So ist es besonders vorteilhaft, wenn das elastische Kunststoffmaterial Polyethylen oder Polypropylen ist.

Bezüglich der Härte des Kunststoffmaterials hat es sich als besonders vorteilhaft erwiesen, wenn das Kunststoffmaterial ein Elastizitätsmodul im Bereich von ungefähr 200 bis ungefähr 1500 N/mm² aufweist. Noch vorteilhafter sind Werte im Bereich von ungefähr 500 bis ungefähr 1000 N/mm².

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Draufsicht auf ein erstes Ausführungsbeispiel einer erfindungsgemäßen Kabeldurchführung;
- Fig. 2: einen Schnitt längs Linie A-A in Fig. 1;
- Fig. 3: eine perspektivische Ansicht des ersten Ausführungsbeispiels von vorne;
- Fig. 4: eine perspektivische Ansicht des ersten Ausführungsbeispiels von hinten;
- Fig. 5: eine Draufsicht ähnlich Fig. 1 auf ein zweites Ausführungsbeispiel;
- Fig. 6: einen Schnitt längs Linie A-A in Fig. 5;
- Fig. 7: eine perspektivische Ansicht ähnlich Fig. 4 des zweiten Ausführungsbeispiels;
- Fig. 8: eine perspektivische Ansicht ähnlich Fig. 4 eines dritten Ausführungsbeispiels;
- Fig. 9: einen Schnitt ähnlich Fig. 2 durch ein viertes Ausführungsbeispiel;
- Fig. 10: eine ausschnittsweise Vergrößerung des Bereichs X in Fig. 9 und
- Fig. 11: eine Draufsicht in Richtung des Pfeils Y auf Fig. 9 auf das vierte Ausführungsbeispiel der erfindungsgemäßen Kabeldurchführung.

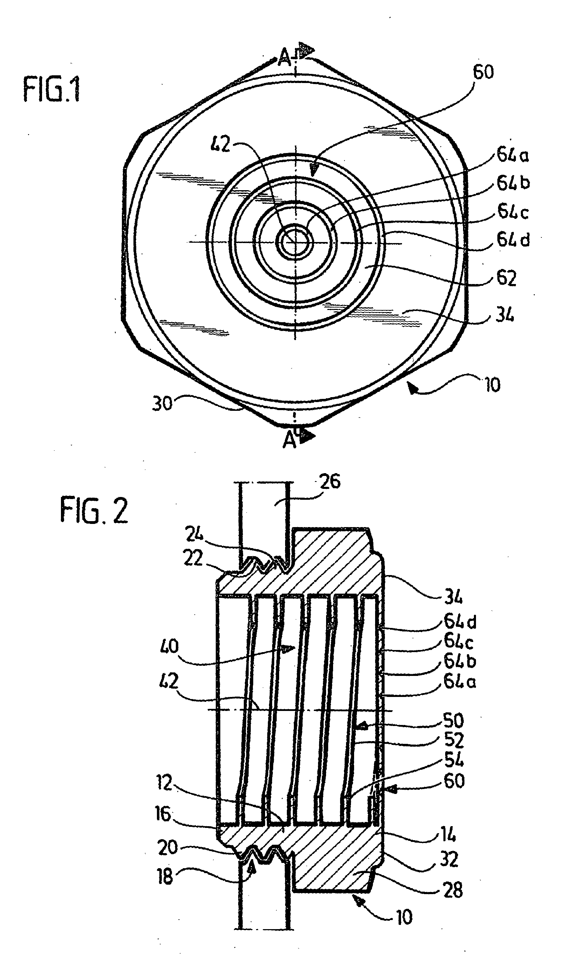

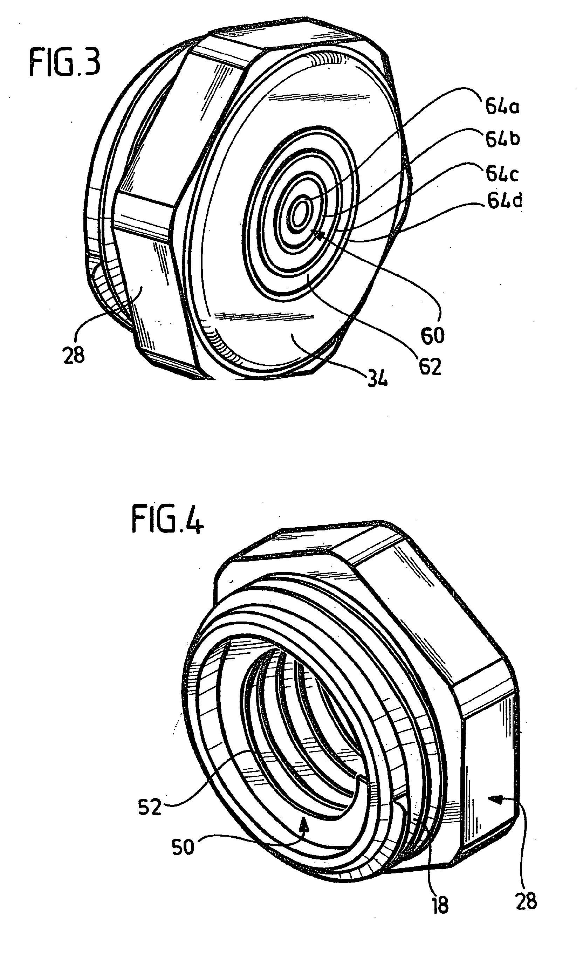

Ein erstes Ausführungsbeispiel einer erfindungsgemäßen Kabeldurchführung, dargestellt in den Figuren 1 bis 4, umfaßt einen als Ganzes mit 10 bezeichneten Montagekörper, welcher eine Montagekörperhülse 12 mit einem äußeren Ende 14 und einem inneren Ende 16 aufweist.

Die Montagekörperhülse 16 trägt im Bereich eines Gewindeabschnitts 18 ein Außengewinde 20, welches in ein entsprechendes Innengewinde 22 im Bereich einer Öffnung 24 einer Gehäusewand 26 einschraubbar ist.

Im Anschluß an den Gewindeabschnitt 18 trägt die Montagekörperhülse 12 einen Drehangriffsring 28, welcher beispielsweise mit Schlüsselflächen 30 versehen ist.

Der Drehangriffsring 28 erstreckt sich dabei vorzugsweise bis zu einem Stirnbereich 32 des Montagekörpers 10, welcher eine Stirnfläche 34 bildet.

Die Montagekörperhülse 12 umschließt ihrerseits einen Durchführungskanal 40 für ein durchzuführendes Kabel, welcher sich längs einer Mittelachse 42 der Montagekörperhülse 12 erstreckt.

In den Durchführungskanal 40 ragt ein sich in Form einer um die Mittelachse 42 herumwindender Lamellenzug 50 hinein, wobei jede Windung der Helix eine Reihe von ineinander übergehenden Lamellen 52 bildet und wobei die Lamellen 52 des Lamellenzugs 50 sich jeweils von der Montagekörperhülse 12 ausgehend in radialer Richtung zur Mittelachse 42 erheben und vorzugsweise mit ihren Flachseiten 54 sich ungefähr quer zur Mittelachse 42 erstrecken.

Die Lamellen 52 sind insgesamt elastisch, tragen stirnseitig eine durchgehende helixförmige Angriffsfläche 56 und werden beim Einführen eines Kabels in den Durchführungskanal 40, vorzugsweise vom äußeren Ende 14 in Richtung des inneren Endes 16, deformiert, wobei sich die Lamellen 52 dann in Richtung des inneren Endes 16 umbiegen und das Kabel in der Art von Widerhaken gegen einen Zug fixieren.

Ferner ist der Durchführungskanal 40 mittels einer als Ganzes mit 60 bezeichneten Dichtmembran verschlossen, welche vorzugsweise mit ihrer äußeren Oberfläche 62 fluchtend mit der Stirnfläche 34 des Montagekörpers 10 angeordnet ist und vorzugsweise im Ausgangszustand den Durchführungskanal 40 vollständig verschließt.

Die Dichtmembran 60 ist zur Einführung des Kabels mit konzentrisch um die Mittelachse 42 herum verlaufenden Sollbruchlinien 64, beispielsweise ausgeführt in Form von Schwächungsstellen der Dichtmembran 60, versehen, so daß beim Einführen des Kabels mit dem Kabel selbst eine der Dicke dieses Kabels entsprechende Öffnung in die Dichtmembran 60 gestoßen werden kann.

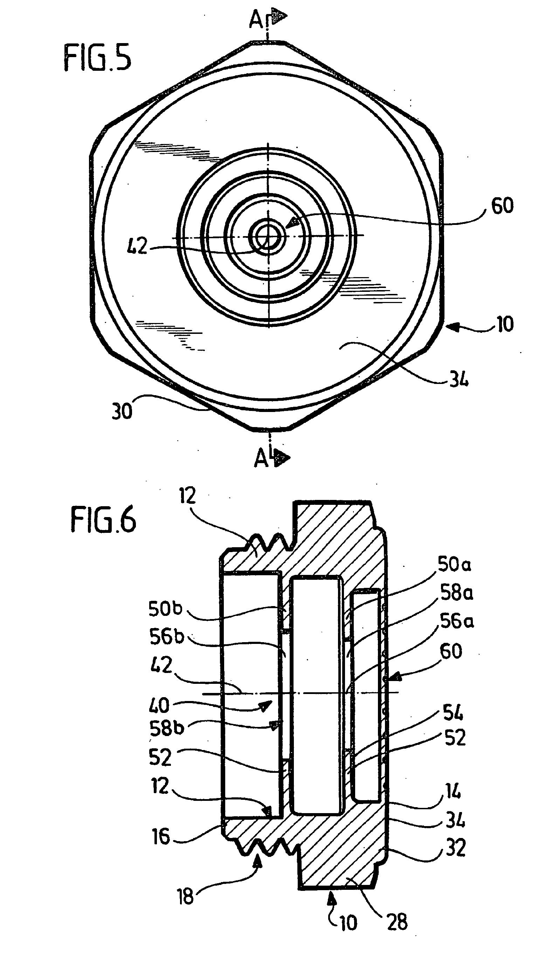

Bei einem zweiten Ausführungsbeispiel einer erfindungsgemäßen Kabeldurchführung, dargestellt in den Figuren 5 bis 7 sind diejenigen Teile, die mit denen des ersten Ausführungsbeispiels identisch sind mit denselben Bezugszeichen versehen, so daß hinsichtlich deren Beschreibung vollinhaltlich auf die Ausführungen zum ersten Ausführungsbeispiel Bezug genommen werden kann.

Im Gegensatz zum ersten Ausführungsbeispiel bilden die Lamellen 52 jeweils in sich geschlossene Lamellenringe 50a und 50b, welche in radialer Richtung zur Mittelachse 42 in den Durchführungskanal 40 hineinragen und sich mit ihren Flachseiten 54 in radialer Richtung und quer zur Mittelachse 42 erstrecken, wobei jeder Lamellenring 50a,b eine Reihe von ineinander übergehenden Lamellen 52 darstellt.

Jeder der Lamellenringe 50a, b weist einen Durchbruch 58a, b auf, wobei der den Durchbruch 58a, b umschließende jeweilige stirnseitige Randbereich 56a bzw. 56b die Angriffsfläche bildet, mit der der jeweilige Lamellenring 52a, b an einer Außenseite eines durchgeführten Kabels anliegt.

Vorzugsweise sind die Lamellenringe 52a und 52b so gewählt, daß der Durchbruch 58b einen größeren Durchmesser aufweist als der Durchbruch 58a so daß bei Durchführen eines Kabels der Lamellenring 50a eine stärkere Deformation erfährt als der Lamellenring 50b und somit noch stärkere Haltekräfte entwickelt als der Lamellenring 52b.

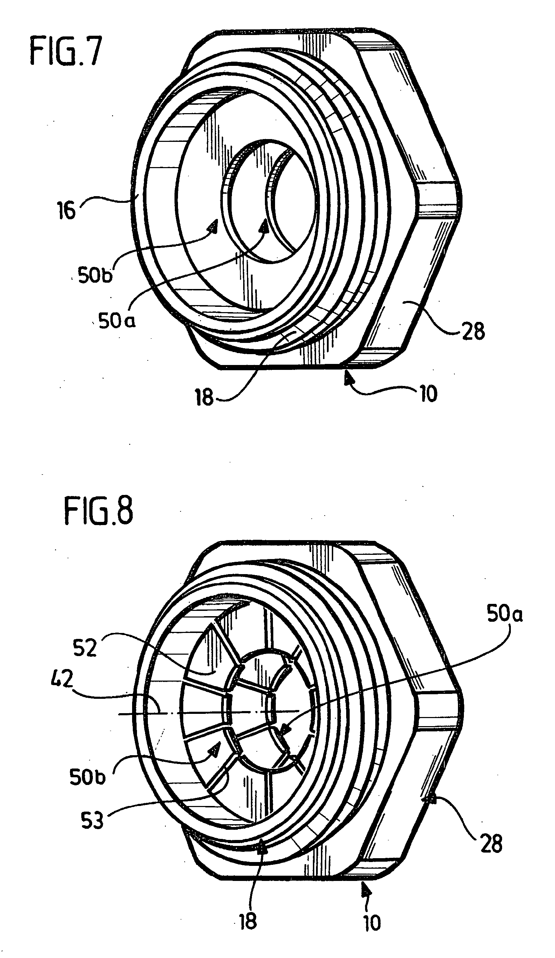

Bei einem dritten Ausführungsbeispiel, dargestellt in Fig. 8, sind die Lamellenringe 50a und 50b nicht in sich geschlossen, sondern die einzelnen Lamellen 52 sind durch Schlitze 53 getrennt und bilden somit Reihen von ringförmig azimutal um die Mittelachse 42 herum verlaufenden Einzellamellen 52, die stirnseitig jeweils einzelne Angriffsflächen 56 tragen.

Im übrigen ist das dritte Ausführungsbeispiel in gleicher Weise ausgebildet wie das zweite Ausführungsbeispiel, so daß hinsichtlich der Beschreibung derselben vollinhaltlich auf das zweite und somit auch auf das erste Ausführungsbeispiel Bezug genommen werden kann.

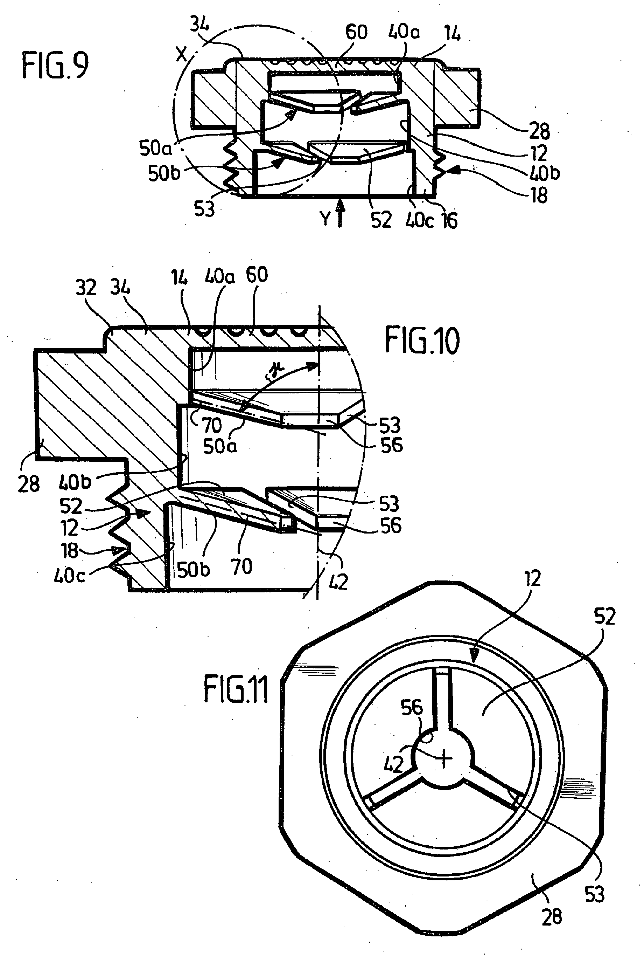

Bei einem vierten Ausführungsbeispiel, dargestellt in Fig. 9 bis 11, sind die Lamellen 52 ebenfalls durch Schlitze 53 getrennt und stellen somit Einzellamellen dar, die stirnseitig jeweils einzelne Angriffsflächen 56 tragen.

Ferner verlaufen bei dem vierten Ausführungsbeispiel die Lamellen 52 gegenüber der Mittelachse 42 geneigt, vorzugsweise in Kegelflächen 70 mit der Mittelachse 42 als Kegelachse, wobei die Kegelflächen 70 mit der Mittelachse einen Winkel y einschließen, welcher größer 45°, vorzugsweise größer 60, noch besser größer 70° und außerdem kleiner 90° ist.

Damit sind die Einzellamellen 52 von sich aus bereits so orientiert, daß sie mit den Angriffsflächen 56 ähnlich Widerhaken auf ein durchgeführtes Kabel wirken.

Ferner ist der Durchführungskanal 40 bei dem vierten Ausführungsbeispiel so ausgebildet, daß dieser in einem dem äußeren Ende 14 zugewandten Kanalbereich 40a den kleinsten Durchmesser hat, wobei sich dieser Kanalbereich 40a bis zu dem dem äußeren Ende 14 zugewandt liegenden Lamellenring 50a erstreckt.

Auf einer dem inneren Ende 16 zugewandten Seite des Lamellenrings 50a hat der Durchführungskanal 40 einen Bereich 40b mit einem größeren Querschnitt als der Bereich 40a und dieser Bereich 40b erstreckt sich bis zum Lamellenring 50b, welcher auf der dem inneren Ende 16 zugewandten Seite des Lamellenrings 50a liegt.

Zwischen dem Lamellenring 50b und dem inneren Ende 16 erstreckt sich ferner noch ein weiterer Bereich 40c des Durchführungskanals 40, welcher einen noch größeren Durchmesser als der Bereich 40b hat.

Damit erweitert sich der Durchführungskanal 40 ausgehend von seinem dem äußeren Ende 14 naheliegenden Bereich 40a stufenweise über die Bereiche 40b und 40c bis zu dem inneren Ende 16, wobei die einzelnen Bereiche 40a und 40b sowie 40b und 40c jeweils durch einen Lamellenring 50a bzw. 50b voneinander getrennt sind.

Im übrigen ist auch das vierte Ausführungsbeispiel in gleicher Weise ausgebildet wie das erste, zweite und dritte Ausführungsbeispiel, so daß für dieselben Teile dieselben Bezugszeichen Verwendung finden und hinsichtlich der Beschreibung vollinhaltlich auf die Ausführungen zu den voranstehenden Ausführungsbeispielen Bezug genommen werden kann.

Bei allen Ausführungsbeispielen ist erfindungsgemäß die gesamte Kabeldurchführung mit allen Elementen als einstückiges Spritzgußteil aus einem elastischen Kunststoffmaterial hergestellt.

Ein derartiges elastisches Kunststoffmaterial ist vorzugsweise Polyethylen oder Polypropylen.

Die Härte des elastischen Kunststoffmaterials wird erfindungsgemäß so gewählt, daß diese im Bereich von ungefähr 200 bis ungefähr 1500 N/mm² liegt. Noch vorteilhafter sind Werte im Bereich von ungefähr 500 bis ungefähr 1000 N/mm².

## Patentansprüche

1. Kabeldurchführung umfassend einen Montagekörper, welcher mit einer Montagekörperhülse in eine Öffnung eines Gehäuses einsetzbar und an dieser fixierbar ist und eine am Montagekörper gehaltene Aufnahme für ein durchzuführendes Kabel, welche einen Durchführungskanal und ein elastisch deformierbares und das durchgeführte Kabel haltendes Fixierelement umfaßt,
**dadurch gekennzeichnet**,daß der Montagekörper (10) und die Aufnahme mit dem Fixierelement einstückig aus elastischem Kunststoff hergestellt sind und daß das Fixierelement (50) durch von einer Innenseite der Montagekörperhülse (12) abstehende elastisch deformierbare Vorsprünge (52) gebildet ist, welche in azimutaler Richtung um eine Mittelachse (42) des Durchführungskanals (40) verlaufende Reihen von an dem Kabel anlegbaren Angriffsflächen (56) bilden, und daß in Richtung der Mittelachse (42) mindestens zwei derartiger Reihen versetzt zueinander angeordnet sind.

2. Kabeldurchführung nach Anspruch 1, dadurch gekennzeichnet, daß die Vorsprünge (52) in Richtung der Mittelachse (42) deformierbar sind.

3. Kabeldurchführung nach Anspruch 1 oder 2, dadurch gekennzeichnet, daß die in Längsrichtung des Durchführungskanals (40) versetzt angeordneten Reihen (50a, b) von Vorsprüngen (52) sich radial zur Mittelachse unterschiedlich weit in den Durchführungskanal (40) hineinerstrecken.

4. Kabeldurchführung nach Anspruch 3, dadurch gekennzeichnet, daß die einem Ende (14) des Durchführungskanals (40) naheliegende Reihen von Vorsprüngen (52) sich radial weiter in den Durchführungskanal hineinerstrecken als einem gegenüberliegenden Ende (16) naheliegende Reihen von Vorsprüngen (52).

5. Kabeldurchführung nach Anspruch 4, dadurch gekennzeichnet, daß die in Richtung der Achse (42) des Durchführungskanals (40) aufeinanderfolgend angeordneten Reihen (50a, b) von Vorsprüngen (52) sich mit zunehmendem Abstand von einem Ende (14) des Durchführungskanals (40) radial weniger weit in diesen hineinerstrecken.

6. Kabeldurchführung nach einem der voranstehenden Ansprüche, dadurch gekennzeichnet, daß die Vorsprünge als Lamellen (52) ausgebildet sind die sich mit ihren Flachseiten (54) quer zur Mittelachse (42) des Durchführungskanals (40) erstrecken.

7. Kabeldurchführung nach Anspruch 6, dadurch gekennzeichnet, daß die Lamellen (52) kreisringförmig angeordnet sind.

8. Kabeldurchführung nach Anspruch 7, dadurch gekennzeichnet, daß die Lamellen (52) azimutal geschlossene Lamellenringe (50a, b) bilden.

9. Kabeldurchführung nach Anspruch 6, dadurch gekennzeichnet, daß die Lamellen (52) helixförmig angeordnet sind.

10. Kabeldurchführung nach Anspruch 9, dadurch gekennzeichnet, daß die Lamellen einen helixförmig verlaufenden durchgehenden Lamellenzug (50) bilden.

11. Kabeldurchführung nach einem der Ansprüche 6 oder 7 oder 9, dadurch gekennzeichnet, daß die Lamellen (52) durch Schlitze (53) voneinander getrennt sind.

12. Kabeldurchführung nach Anspruch 11, dadurch gekennzeichnet, daß die Schlitze (53) in ungefähr radialer Richtung zur Mittelachse (42) verlaufen.

13. Kabeldurchführung nach einem der Ansprüche 6 bis 12,
dadurch gekennzeichnet, daß die Lamellen (52) gegenüber der Mittelachse (42) geneigt verlaufen.

14. Kabeldurchführung nach einem der voranstehenden Ansprüche, dadurch gekennzeichnet, daß der Durchführungskanal (40) sich von seinem äußeren Ende (14) in Richtung seines inneren Endes (16) erweitert.

15. Kabeldurchführung nach Anspruch 14, dadurch gekennzeichnet, daß der Durchführungskanal (40) Bereiche (40a, 40b, 40c) aufweist, die unterschiedliche Querschnitte aufweisen, wobei jeder der von dem äußeren Ende (14) in Richtung des inneren Endes (16) aufeinanderfolgenden Bereichen (40a, 40b, 40c) einen größeren Querschnitt aufweist als der vorangegangene Bereich (40a, 40b, 40c).

16. Kabeldurchführung nach einem der voranstehenden Ansprüche, dadurch gekennzeichnet, daß der Durchführungskanal (40) mit einer Dichtmembran (60) verschlossen ist.

17. Kabeldurchführung nach Anspruch 16, dadurch gekennzeichnet, daß die Dichtmembran (60) Sollbruchstellen (64) aufweist.

18. Kabeldurchführung nach Anspruch 17, dadurch gekennzeichnet, daß die Dichtmembran (60) ringförmig um die Mittelachse (42) des Durchführungskanals (40) herum verlaufende Sollbruchlinien (64) aufweist.

19. Kabeldurchführung nach einem der Ansprüche 16 bis 18,
dadurch gekennzeichnet, daß die Dichtmembran (60) den Durchführungskanal (40) auf seiner Außenseite (14) abschließt.

20. Kabeldurchführung nach Anspruch 19, dadurch gekennzeichnet, daß die Dichtmembran (60) in einem Stirnbereich (32) des Montagekörpers (10) angeordnet ist.

21. Kabeldurchführung nach einem der Ansprüche 16 bis 20,
dadurch gekennzeichnet, daß die Dichtmembran (60) einstückig an dem Montagekörper (10) angeformt ist.

22. Kabeldurchführung nach einem der voranstehenden Ansprüche, dadurch gekennzeichnet, daß der Montagekörper (10) mit einem Gewindeabschnitt (18) zum Einschrauben in die Öffnung (24) des Gehäuses versehen ist.

23. Kabeldurchführung nach Anspruch 22, dadurch gekennzeichnet, daß der Montagekörper (10) Drehangriffsflächen (30) trägt.

24. Kabeldurchführung nach Anspruch 23, dadurch gekennzeichnet, daß die Drehangriffsflächen (30) Schlüsselflächen sind.

25. Kabeldurchführung nach einem der voranstehenden Ansprüche, dadurch gekennzeichnet, daß das elastische Kunststoffmaterial Polyethylen oder Polypropylen ist.

26. Kabeldurchführung nach einem der voranstehenden Ansprüche, dadurch gekennzeichnet, daß das Kunststoffmaterial einen Elastizitätsmodul im Bereich von ungefähr 200 bis ungefähr 1500 N/mm² aufweist.
